# EUROPEAN PATENT SPECIFICATION

(11) **EP 2 720 455 B1**
(45) Date of publication and mention of the grant of the patent: **22.06.2016**
(21) Application number: 12797532.4
(22) Date of filing: 14.05.2012
(51) Int. Cl.: H04N 5/369, G03B 35/08, H04N 5/225, H04N 9/04, H04N 13/02

(54) **IMAGE PICKUP DEVICE IMAGING THREE-DIMENSIONAL MOVING IMAGE AND TWO-DIMENSIONAL MOVING IMAGE, AND IMAGE PICKUP APPARATUS MOUNTING IMAGE PICKUP DEVICE**
BILDAUFNAHMEVORRICHTUNG ZUR WIEDERGABE DREIDIMENSIONALER BEWEGTER BILDER UND ZWEIDIMENSIONALER BEWEGTER BILDER SOWIE HALTEVORRICHTUNG FÜR DIE BILDAUFNAHMEVORRICHTUNG
DISPOSITIF DE CAPTURE D'IMAGE IMAGEANT UNE IMAGE ANIMÉE EN TROIS DIMENSIONS ET UNE IMAGE ANIMÉE EN DEUX DIMENSIONS, ET APPAREIL DE CAPTURE D'IMAGE COMPORTANT LE DISPOSITIF DE CAPTURE D'IMAGE

(30) Priority: 09.06.2011 JP 2011129618
(43) Date of publication of application: 16.04.2014
(73) Proprietor: FUJIFILM Corporation, Tokyo 106-0031 (JP)
(72) Inventor: KAWAMURA Noriko, Saitama-shi, Saitama (JP); KAWAI Tomoyuki, Saitama-shi, Saitama (JP); OSHIMA Hiroyuki, Saitama-shi, Saitama (JP); OOTA Takeshi, Saitama-shi, Saitama (JP); ENDO Hiroshi, Saitama-shi, Saitama (JP); INOUE Tomoki, Saitama-shi, Saitama (JP)
(74) Representative: Hoffmann Eitle
(86) International application number: PCT/JP2012/062276
(87) International publication number: WO 2012/169318

(56) References cited:
- EP-A1- 2 249 192
- WO-A1-2010/005104
- WO-A1-2010/134444
- JP-A- 2003 007 994
- JP-A- 2003 007 994
- JP-A- 2007 279 512
- JP-A- 2008 147 821
- JP-A- 2008 312 073
- JP-A- 2009 204 987
- JP-A- 2010 081 609

## Description

### Technical Field

The present invention relates to an image capturing element which captures a stereoscopic moving image and a planar moving image, and an image capturing apparatus equipped with the image capturing element.

### Background Art

There is a conventional image capturing apparatus which captures a stereoscopic image (hereinafter, also referred to as a 3D image) described in, for example, the following Patent Literature 1. The conventional image capturing apparatus is adapted to include two cameras to photograph the same subject with the left and right cameras to reproduce a stereoscopic image of a subject. However, the conventional stereoscopic image capturing apparatus has a problem in that it needs two cameras and thus, cost increases and a size of the apparatus increases.

Accordingly, there has been proposed a conventional technology described in the following Patent Literature 2 as an image capturing apparatus which is capable of photographing a stereoscopic image of a subject with a single camera. The stereoscopic image capturing apparatus is adapted to divide a plurality of pixels (photoelectric conversion element: photodiode) two-dimensionally arranged on a surface of a solid-state image capturing element into two groups such that light coming from a direction when the subject is viewed from a right side enters into one group and light coming from a direction when the subject is viewed from a left side enters into the other group.

According to the conventional technology, there is a problem in that although the stereoscopic image of the subject may be captured with a single camera (image capturing element), two dimensional image of the subject (planar image, hereinafter, also referred to as a 2D image) may not be photographed.

Recently, the demand for the image capturing apparatus is increasing and thus, a moving image photographing function, which is difficult for the conventional technology described in the Patent Literatures 1 and 2 to implement, capable of photographing the 3D moving image and 2D moving image simultaneously as well as low cost and miniaturization are being demanded.

WO 2010/13444 A1, WO 2010/005104 A1 and EP 2249192 A1 disclose further divided pupil sensor layouts.

### Citation List

### Patent Literature

Patent Literature 1: JP-A-11-341522
Patent Literature 2: JP-A-2003-7994

### SUMMARY OF INVENTION

### Technical Problem

An object of the present invention is to provide an image capturing element which is capable of appropriately processing both the 3D moving image photographing and the 2D moving image photographing, and an image capturing apparatus equipped with the image capturing element.

### Solution to Problem

An image capturing element of the present invention as defined in claim 1.

An image capturing apparatus of the present invention as defined in claim 3.

### Advantageous Effects of Invention

According to the present invention, it becomes possible to capture both the high quality stereoscopic moving image and planar moving image with a single image capturing element.

### BRIEF DESCRIPTION OF DRAWINGS

FIG. 1 is a perspective view of an external appearance of an image capturing apparatus (digital camera) according to an embodiment of the present invention.
FIG. 2 is a functional block diagram of a configuration of the image capturing apparatus illustrated in FIG. 1.
FIG. 3 is a diagram illustrating a surface of a solid-state image capturing element illustrated in FIG. 2.
FIG. 4 is a diagram explaining a case where a 3D moving image is captured by the solid-state image capturing element illustrated in FIG. 3.
FIG. 5 is a diagram explaining a principle with which the 3D image may be photographed using phase difference detection pixels.
FIG. 6 is a diagram explaining a state where a 2D moving image is read by the solid-state image capturing element according to an embodiment in which the phase difference detection pixels are provided at five-pixel intervals.
FIG. 7 is a flowchart illustrating a process sequence at the same time of generating the 2D moving image data.
FIG. 8 is a diagram explaining a case where a 2D moving image having a HD image quality is read from the solid-state image capturing element of FIG. 5.
FIG. 9 is a diagram explaining a case where a horizontal pixel addition is further performed by the reading method of FIG. 8.

### DESCRIPTION OF EMBODIMENTS

Hereinafter, an embodiment of the present invention will be described with reference to the accompanying drawings.

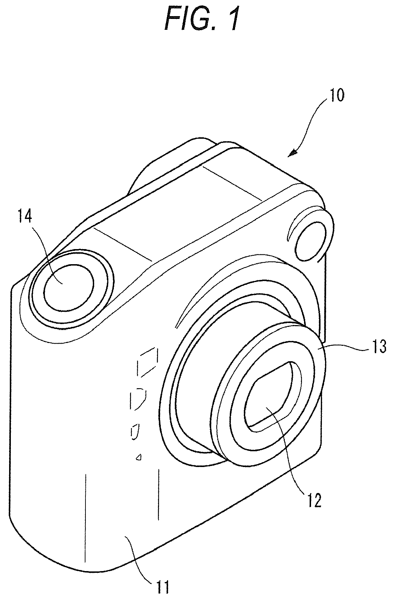

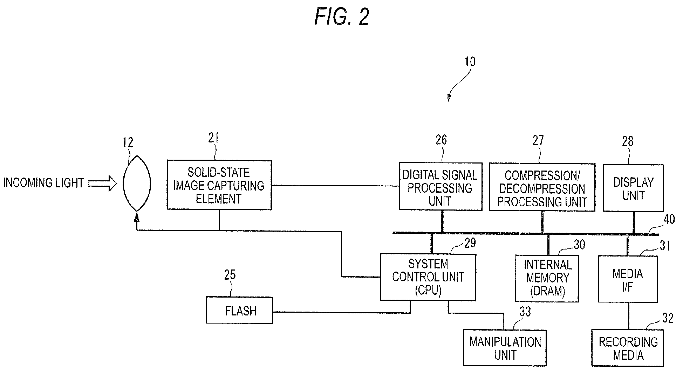

FIG. 1 is a perspective view of an external appearance of an image capturing apparatus (digital camera) according to an embodiment of the present invention. In the monocular image capturing apparatus (digital camera) 10, a lens barrel receiving a photographing lens 12 is retractably attached to the front part of a camera case 11. A shutter release button 14 is provided at a right end portion of the upper surface of the camera case 11, and a liquid crystal display unit (display unit 28 of FIG. 2) not illustrated in FIG. 1 is provided at the rear of the camera case 11.

FIG. 2 is a functional block diagram of a configuration of the image capturing apparatus 10 illustrated in FIG. 1. The image capturing apparatus 10 includes the photographing lens 12 and a CMOS type solid-state image capturing element 21 positioned in the rear of the photographing lens 12 to be disposed on an imaging plane thereof. The photographing lens 12 and the solid-state image capturing element 21 are driven by instructions from the system control unit (CPU) 29 to be described below.

The solid-state image capturing element 21 is a CMOS type image sensor in the present embodiment, but may be a CCD type or other type of solid-state image capturing element.

The image capturing apparatus 10 of the present embodiment further includes a digital signal processing unit 26 which acquires a captured digital image signal to perform an interpolation processing, a white balance correction and a RGB/YC conversion processing, a compression/decompression processing unit 27 which compresses the captured image signal to the image data in JPEG format or the like, or decompresses the image data 27, a display unit 28 which displays a menu or the like, a through image or a captured image, a system control unit (CPU) 29 which comprehensively controls the entire digital camera, an internal memory 30 such as a frame memory, a media interface (I/F) unit 31 which interfaces with a recording media 32 storing the JPEG image data or the like, and a bus 40 which connects these components with each other.

Further, a manipulation unit 33 for inputting instructions from the user and a flash 25 emitting a light by instructions from the system control unit 29 are connected to the system control unit 29.

The image capturing apparatus 10 photographs a high definition 2D still image of a subject, a 2D moving image or a 3D moving image having a lower resolution as compared to a high definition still image based on the selection instruction from the manipulation unit 33 by the user, and performs a driving control of the solid-state image capturing element 21 or an image processing based on these selection instruction.

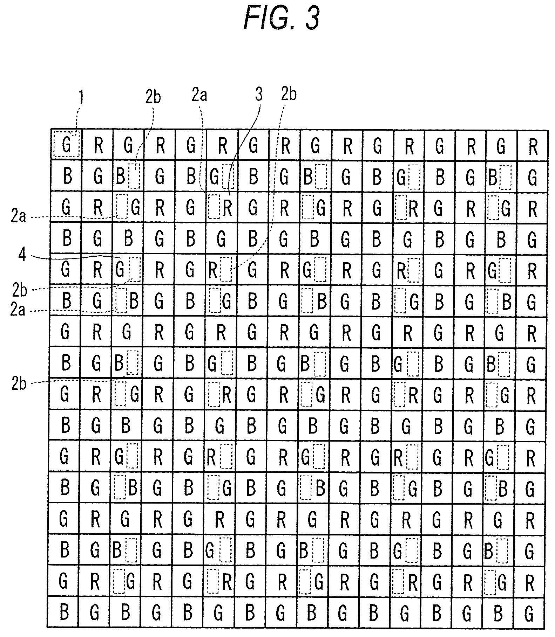

FIG. 3 is a diagram illustrating a surface of the solid-state image capturing element 21, and illustrates a pixel arrangement and a color filter arrangement on each pixel. Each square represents each pixel (photoelectric conversion element) formed on a semiconductor substrate, and R, G and B described on each pixel represents colors (R=red, G=green, B=blue) of three primary color filters laminated on each pixel. A signal reading-out circuit or a vertical scanning circuit or a horizontal scanning circuit or the like may be the same as those of a typical CMOS type image sensor and thus, illustration thereof is omitted.

Each pixel is arranged in a square lattice form and the RGB color filters are arranged thereon in a Bayer arrangement in the solid-state image capturing element 21 of the present embodiment. A micro lens (not illustrated) is laminated on the RGB color filters to be corresponded with each pixel. The pixel existed in a discrete and periodic position is set as a phase difference detection pixel in the solid-state image capturing element 21. In the present embodiment, two pixels spaced apart by two-pixel in the vertical direction are set as a pixel pair and the openings 2a and 2b of the light shielding film of one pixel and the other pixel of the pixel pair are formed eccentrically with respect to the center of each pixel in a direction opposite to each other, respectively, to configure the phase difference detection pixel.

In a normal pixel (pixel other than the phase difference detection pixel), as described with a dotted rectangular frame in an upper and left side of FIG. 3, the opening 1 of the light shielding film having a size substantially the same as a light receiving surface of the pixel is open. In contrast to this, the openings 2a, 2b of the light shielding films of the pixel pair of the phase difference detection pixels are smaller than the opening 1 of the light shielding film and thus, the opening 2a of the light shielding film is open with only a left half as compared to the opening 1 and, the opening 2b of the light shielding film is open with only a right half as compared to the opening 1 in the illustrated example. Further, the opening 1 of the light shielding film is illustrated on only one spot in FIG. 3, but provided on other normal pixels (since the figure becomes complicated, illustration is omitted).

The opening center position of the opening 2a of the light shielding film is provided to be eccentric leftwardly with respect to the center of the pixel and the opening center position of the opening 2b of the light shielding film is provided to be eccentric rightwardly with respect to the center of the pixel. As illustrated in FIG. 1, the lens 12 is disposed in front of the solid-state image capturing element 21, light received by the pixel through the opening 2a of the light shielding film by passing through the lens 12 is light mainly coming from the left of the lens 12, that is, mainly_coming from a direction when viewing the subject with the left eye and light received by the pixel through the opening 2b of the light shielding film is light mainly coming from the right of the lens 12, that is, mainly coming from a direction when viewing the subject with the right eye.

That is, among each pixel pair constituting the phase difference detection pixels, the captured image signal of a pixel having the opening 2a of the light shielding film becomes an image when viewing the subject with the left eye and the captured image signal of a pixel having the opening 2b of the light shielding film is an image when viewing the subject with the right eye. Therefore, it is possible to reproduce the stereoscopic image of the subject by combining both the captured image signals.

One pixel 3 (first pixel, for example, a pixel having the opening 2a of the light shielding film) constituting the pixel pair of the phase difference detection pixels of the present embodiment is adopted such that a pixel is set as the phase difference detection pixel every three-pixel both in the vertical direction and the horizontal direction, and the other pixel 4 (second pixel, for example, a pixel having the opening 2b of the light shielding film) of the pixel pair is provided below the first pixel 3 by two-pixel in the vertical direction (otherwise, also in the horizontal direction). However, in general, the first pixel 3 may be provided at every 2n+1-pixel both in the horizontal direction and the vertical direction. As such, a disposition position of the phase difference detection pixel pair is determined and thus, the color filter arrangement of the phase difference detection pixel pair also become a Bayer arrangement having the RGB primary colors.

Further, hereinafter, it is assumed that a first pixel and a second pixel constituting the pixel pair of the phase difference detection pixels are denoted by reference numerals 3 and 4, respectively, and the normal pixel having the opening 1 of the light shielding film other than the phase difference detection pixel is denoted by reference numeral 2.

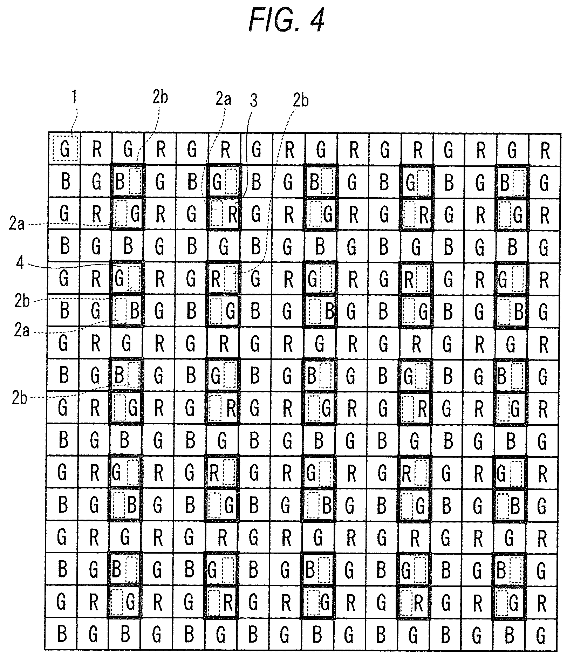

FIG. 4 illustrates the pixel pair which reads the captured image signal when a stereoscopic moving image is captured by the solid-state image capturing element 21 illustrated in FIG. 3, and only the captured image signals detected by the phase difference detection pixels 3, 4 illustrated in bold line frame in the figure are read by the pixel interleaving reading-out both in the horizontal and vertical directions.

The photographing is performed by, for example, a rolling shutter drive, and when the captured image signal is read from the solid-state image capturing element 21, the reading is performed in an order of the horizontal line from only the horizontal lines where the phase difference detection pixels 3, 4 are provided.

Also, the image processing is performed for the captured image signal of the first pixel 3 (pixel on which the opening 2a of the light shielding film is equipped) as the image data when viewing the subject with the left eye and the image processing is performed for the captured image signal of the second pixel 4 (pixel on which the opening 2b of the light shielding film is equipped) as the image data when viewing the subject with the right eye to associate the subject images after the image processing with each other to record the captured image data for each frame in the memory, such that the stereoscopic moving image of the subject may be recorded. Alternatively, it may be recorded as a stereoscopic still image as well.

Since the captured image signal for the left eye or the captured image signal for the right eye read from the solid-state image capturing element 21 becomes a signal read from a pixel of the Bayer arrangement, respectively, an image processing engine for the existing Bayer arrangement may be used for the image processing and thus, low cost may be implemented.

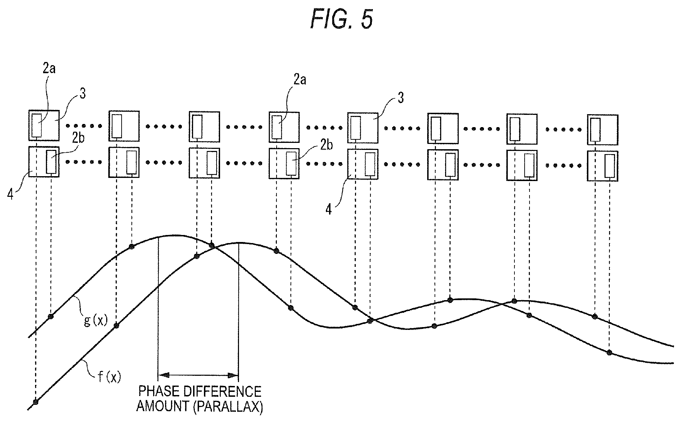

FIG. 5 is a diagram explaining a principle capable of capturing the stereoscopic image of the subject with the phase difference detection pixel pair. The phase difference detection pixel pairs are arranged at required intervals in the horizontal direction, and change of the captured image signal obtained through the opening 2a of the light shielding film is defined as a signal f(x) and change of the captured image signal obtained through the opening 2b of the light shielding film is defined as a signal g(x).

The signal f(x) and signal g(x) are obtained by receiving light coming from the same subject on the same horizontal line and become the same waveform shifted from each other in the horizontal direction, such that a deviation amount between both the signals becomes an amount of phase difference. The amount of phase difference is parallax according to a distance to the subject, and the captured image signal for the right eye and the captured image signal for the left eye having the amount of phase difference are read from the solid-state image capturing element 21 and thus, it becomes possible to generate the stereoscopic image of the subject.

Next, a case of photographing the 2D moving image using the image capturing apparatus 10 will be described. As described above, the 3D moving image may be photographed using the image capturing apparatus 10, but there may be a case where some user prefers a 2D moving image. Further, there is also a case where a monitor or a television receiver for reproducing the 3D image is not present and the monitor or the television receiver is adapted to only reproduce the 2D image. Alternatively, there is a case where both the 3D moving image and the 2D moving image are required to be photographed simultaneously. Therefore, the image capturing apparatus 10 of the present embodiment is equipped with a photographing function for the 3D image as well as the 2D moving image.

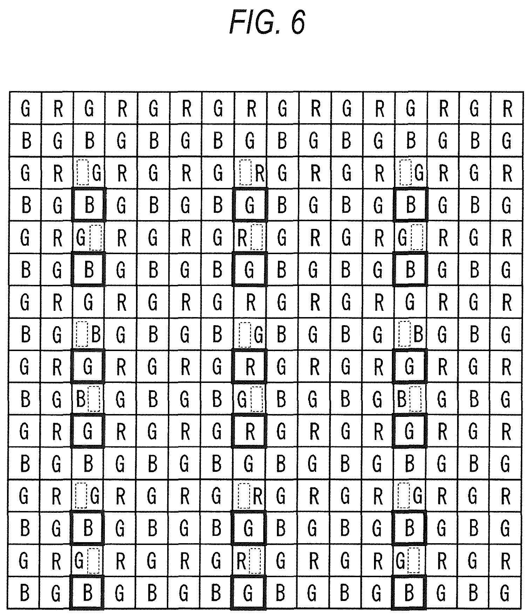

FIG. 6 is a diagram explaining a first embodiment in which the 2D moving image is photographed. In the solid-state image capturing element 21 of the present embodiment, the phase difference detection pixels are provided at five-pixel intervals. The pixel arrangement and a color filter arrangement are the same as those of FIG. 3 and FIG. 4. In the present embodiment, the normal pixels surrounded by the black bold line frame illustrated in FIG. 6 are used at the time of the 2D moving image photographing.

The pixels surrounded by the black bold line frame of FIG. 6 are pixels which are adjacent to and located vertically below the phase difference detection pixel pair provided at five-pixel intervals (2n+1:n=2) both in the horizontal direction and the vertical direction, and become a pair of normal pixels 2. In the present embodiment, a moving image is generated using the addition mean value of the captured image signal detected by each pixel 2 of the normal pixel pair. The addition mean value is used such that, the S/N is enhanced.

In a case of photographing both the 3D moving image and the 2D moving image, each captured image signal of a pixel line (horizontal line) in which the phase difference detection pixels 3, 4 exist and a pixel line in which the normal pixel pair 2 used for photographing the 2D moving image exist may be read. Accordingly, the 3D moving image and the 2D moving image may be simultaneously photographed.

When the addition mean value is used as data for generating the 2D moving image, each signal disposition position becomes an addition gravity center position of the pixel pair and becomes a position nearest to each pixel position of the 3D image. Accordingly, it is possible to obtain the 3D moving image and the 2D moving image having the same resolution with the same image.

In the embodiment of FIG. 6, the 2D moving image is captured using the pixel which is adjacent to and located vertically below the phase difference detection pixels 3, 4, but the pixel which is adjacent to and located vertically above the phase difference detection pixels 3, 4 may be used. Alternatively, the adjacent pixel located at horizontal right side of the phase difference detection pixels 3, 4 may be used and further, the adjacent pixel located at the horizontal left side of the phase difference detection pixels 3, 4 may be used. Even when any adjacent pixel is used, the color disposition of the signal read from the pixel disposition thereof becomes the Bayer arrangement. Therefore, the image processing engine for the Bayer arrangement may be used so that implementation of low cost becomes possible.

When the 2D moving image is captured using the normal pixel 2 located at the horizontal right side or horizontal left side, the 3D moving image data and the 2D moving image data may be read from the same horizontal line from the solid-state image capturing element 21, it becomes possible to simultaneously read the 3D moving image and the 2D moving image in a short time.

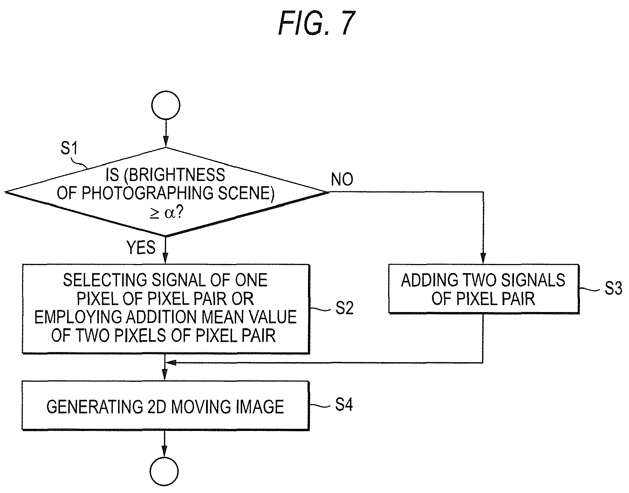

FIG. 7 is a flowchart illustrating a processing sequence when the photographing of 2D moving image data according to the second embodiment is performed. In the embodiment of FIG. 6, the 2D moving image is generated using the addition mean value of the normal pixel pair, but is not limited thereto. The 2D moving image may be generated either by using only the captured image signal of one pixel of the pixel pair or by adding both captured image signals of the pixel pair from externally to the solid-state image capturing element. Selection of the 2D moving image generation method may be determined by brightness of a photographing scene.

In the present embodiment, brightness of the photographing scene is determined at step S1, and when the brightness is a predetermined threshold α or more, the process proceeds to step S2. The captured image signal of one pixel of the pixel pair is employed or the addition mean value of the two pixels of the pixel pair is employed and then, the process proceeds to step S4.

As a determination result of step S1, the brightness of the scene is dark with being less than the predetermined threshold α, the process proceeds to step S3 in order to implement a high sensitivity, and the captured image signals of the two pixels of the pixel pair are added and the process proceeds to step S4. The 2D moving image data is generated at step S4 and the process ends.

Further, when the 3D moving image and the 2D moving image are not simultaneously photographed but only the 2D moving image is photographed, it is possible to photograph a moving image having a wide dynamic range. A reset signal or a reading-out signal applied to a signal reading-out circuit of the pixel is adjusted to shorten the exposure time of one pixel 2 of the other pixel pair with respect to an exposure time of the other pixel 2 of the other pixel pair in the horizontal line to perform photographing, and both the captured image signals are added, such that it is possible to obtain the 2D moving image having a wide dynamic range.

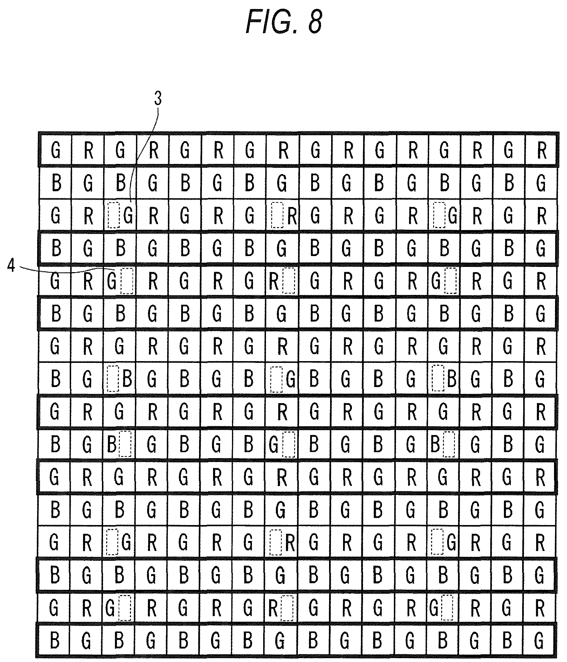

FIG. 8 is a diagram explaining a reading method of reading the captured image signal for a 2D moving image from the solid-state image capturing element according to a third embodiment. In the first and the second embodiments, a case of generating the 2D moving image having the same resolution as the 3D moving image is described, but there is a case where the 2D moving image in which the horizontal resolution is increased is demanded, separately from the 3D moving image. For example, there is a case where a moving image of a HD quality having an aspect ratio of 16:9 is demanded.

The aspect ratio of the image photographed by the image capturing apparatus 10 is normally 4:3, but there is a case where people would like to appreciate the moving images with a large screen of the television receiver having the aspect ratio of 16:9. In such a case, a reading method of the following third embodiment may be desirably adopted and is selected by the menu screen of the image capturing apparatus 10.

In FIG. 8, the pixels in the horizontal line including only the normal pixels represented by a bolded black line border are selected to read the captured image signal for the 2D image. In this case, the pixel interleaving is not performed in the horizontal line and the pixel interleaving is performed in the vertical line without reading the horizontal line in which the phase difference detection pixels 3, 4 exist and the horizontal line which is adjacent to and located directly above the phase difference detection pixel 3 in the vertical direction. The photographing is performed by, for example, a rolling shutter drive, and when the captured image signal is read from the solid-state image capturing element 21, the reading is performed in an order of the horizontal line.

In the reading method illustrated in FIG. 8, since the captured image signal of the pixels having the same color are read by two pixels in the vertical direction, when the two pixels having the same color of the vertical direction are added, the color arrangement of the signal becomes the Bayer arrangement. The addition mean value other than the addition of the two pixels having the same color may be adopted. Determination as to whether which one is to be adopted may be made according to brightness of the photographing scene as described in the embodiment of FIG. 7.

According to the embodiment, the 2D moving image is generated using the captured image signals of all the normal pixels of the horizontal direction in the reading-out line, it becomes possible to suppress the causes for image quality deterioration such as a false color or jaggie.

Further, in the embodiment illustrated in FIG. 8, the horizontal line located right above the phase difference detection pixel 3 is not set, but the horizontal line may also be set as a reading-out line to read the captured image signal of the pixel 2. When doing as such, since a line being GBGB ... of a third row as the reading-out line and another line being RGRG ... of a third row are alternately arranged, although 2-pixel addition is described as an example in FIG. 8, it becomes possible to achieve higher sensitivity by performing 3-pixel addition of the vertical direction.

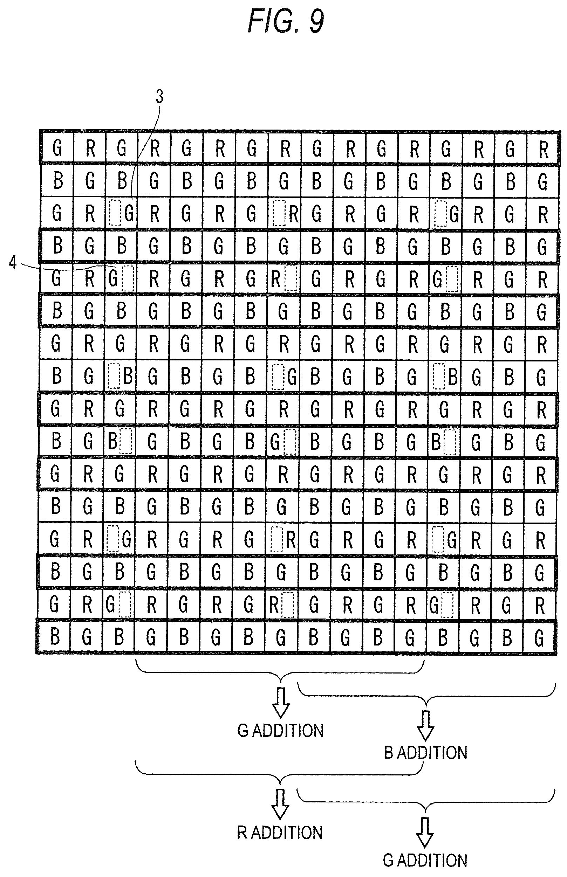

An addition of 2-pixel having the same color (in the modified example, 3-pixel addition) in the vertical direction is explained in FIG. 8, but an addition of pixel having the same color of the horizontal direction may be performed. An example of addition is illustrated in FIG. 9. The color filter arrangement of the last stage of FIG. 9 becomes BGBG..., and an example in which five G pixels are undergone a 5-pixel addition is illustrated therein. The position of signal of added G pixel becomes an addition gravity center position of the five G pixels. The 5-pixel addition of B pixels is provided to be overlapped with a portion of a 5-pixel addition range of G pixels. Similarly, the 5-pixel addition of R pixels or the 5-pixel addition of G pixels is performed in a line in which the color filter arrangement becomes GRGR...in the reading-out line. As such, since the pixels of the horizontal direction are added, generation of jaggies becomes lower.

Further, in this example, descriptions will be made for pixels "5-pixel addition", but the 2-pixel addition or the 3-pixel addition may be adopted and the addition is determined according to the resolution of the moving image intended to be obtained. The number of pixels for addition may be determined according to brightness of the photographing scene as described in FIG. 7.

In a case where a 2D still image of HD is photographed using the solid-state image capturing element 21, the captured image signal of each of all the pixels is read. Accordingly, it is possible to obtain a high definition image proportional to the number of pixels. In this case, since the openings 2a, 2b of the light shielding films of the phase difference detection pixels 3, 4 are narrower than the opening 1 of the light shielding film (FIG. 3) of the normal pixel the sensitivity thereof is low. Therefore, the captured image signals of the phase difference detection pixels 3, 4 are corrected by performing the interpolation operation using data of the normal pixel having the same color and located therearound, otherwise, the captured image signal is corrected by setting an amplification ratio of an amplification processing performed by the digital signal processing 26 with respect to the captured image signals of the phase difference detection pixels 3, 4 larger than that with respect to the captured image signal of the normal pixel.

As described above, according to the above-described embodiment, when the 3D image is captured, the image processing is performed using only the captured image signal of the phase difference detection pixel, and when the 2D image which is not a still image is captured, the image processing is performed using only the captured image signal of the normal pixel other than the phase difference detection pixel. Therefore, both the 3D image and the 2D image are photographed together and read from the solid-state image capturing element 21 and then, both the images may be distinguished by the image processing to be stored in a recording media as each image data. Further, when the 2D moving image is captured, the number of pixels for addition may be controlled according to brightness of the photographing scene and thus, it is possible to generate a moving image having required sensitivity.

Further, when the pixel addition is performed as in the above-described embodiment, the addition gravity center position is set to the position of the phase difference detection pixel such that phase difference irregularity in the screen may be eliminated, and thus it becomes possible to obtain a high quality moving image.

As described above, an image capturing element of the embodiment is characterized in that a plurality of pixels are arranged in a square lattice form, the color filters are arranged in a Bayer arrangement, a pair of a first phase difference detection pixel which acquires one of the captured image signals for a right eye and a left eye and a second phase difference detection pixel which acquires the other of the captured image signals for the right eye and the left eye is provided on discrete and periodic positions in the square lattice form, the first phase difference detection pixel is provided among the respective pixels of the square lattice form at 2n+1-pixel (n=1, 2, ...) intervals both in a horizontal direction and a vertical direction, and the second phase difference detection pixel of the pair is provided on a pixel having the same color filter and spaced apart with respect to the first phase difference detection pixel by two pixels. Accordingly, the color filter arrangement of the phase difference detection pixel pair may be arranged in the Bayer arrangement.

Further, the image capturing element of the embodiment is characterized by the above-described image capturing element and n=2. Accordingly, it becomes possible to maximize the resolution of the stereoscopic image.

Further, an image capturing apparatus of the embodiment is characterized by including an image capturing element driving unit which reads the captured image signal of the phase difference detection pixel when capturing the stereoscopic moving image.

Further, the image capturing apparatus of the embodiment is characterized in that when capturing the planar moving image, the captured image signal of the pixel other than the phase difference detection pixel is read.

Further, the image capturing apparatus of the embodiment is characterized by further including an image processing unit which generates the planar moving image by using the captured image signal of any one of the plurality of adjacent pixels having the same color filter among the pixels other than the phase difference detection pixel or using the addition mean value of the captured image signals of the plurality pixels. Accordingly, the 2D moving image may be obtained rapidly and a 2D moving image with high S/N may be obtained.

Further, the image capturing apparatus of the embodiment is characterized in that when the photographing scene is dark, the image processing unit generates the planar moving image by adding the captured image signals of the plurality of adjacent pixels having the same color filter among the pixels other than the phase difference detection pixel. Accordingly, a 2D moving image with high sensitivity may be obtained.

Further, the image capturing apparatus of the embodiment is characterized in that the planar moving image and the stereoscopic moving image are captured simultaneously. Accordingly, two types of the moving images may be obtained in a short time.

Further, the planar moving image of the image capturing apparatus of the embodiment is characterized in that only pixel interleaving of the vertical direction is performed without performing pixel interleaving for the pixels of the horizontal direction of the image capturing element to produce an image having an aspect ratio of 16:9. Accordingly, it becomes possible to obtain the 2D moving image which can be viewed with a large screen of the television receiver having the aspect ratio of 16:9.

Further, the image capturing apparatus of the embodiment is characterized in that when capturing the planar still image of high quality, the captured image signals are read from all the pixels of the image capturing element and the captured image signal of the phase difference detection pixel is corrected to generate the planar still image with high definition. Since the normal pixels are disposed around the phase difference detection pixel, the correction may be performed easily and reliably, and the high quality planar still image with high definition may be easily obtained.

According to the embodiment described above, it becomes possible to acquire the moving image that satisfies demand of the user at a low cost and in a short time.

### Industrial Applicability

The image capturing apparatus according to the present invention may photograph the still image as well as the 3D moving image and the 2D moving image, and may be used as, for example, a digital camera equipped with moving image photography function.

While the present invention is described in detail and with reference to a specific embodiment, it is apparent to an ordinary skilled person in the art that various changes and modification may be made without departing from a scope of the present invention.

### Reference Signs List

1 opening of light shielding film of normal pixel
2a, 2b opening of light shielding film of phase difference detection pixel
3, 4 phase difference detection pixel
10 image capturing apparatus
12 photographing lens
26 digital signal processing unit
29 system control unit

## Claims

1. An image capturing element (21), wherein
a plurality of pixels are arranged in a square lattice form,
color filters are arranged in a Bayer arrangement, a pair of a first phase difference detection pixel (2b) which acquires one of captured image signals for a right eye and a left eye and a second phase difference detection pixel (2b) which acquires the other of the captured image signals for the right eye and the left eye is provided on discrete and periodic positions in the square lattice form,
**characterized in that**
the first phase difference detection pixel (2a) is provided among the respective pixels of the square lattice form at every (2n+1) th - pixel position (n=1, 2, ...) both in a horizontal direction and a vertical direction,
the second phase difference detection pixel (2b) of the pair is provided on a pixel having the same color filter as its corresponding first phase difference detection pixel and is only spaced apart with respect to its corresponding first phase difference detection pixel by two pixels in vertical direction; wherein
pixels in the square lattice form other than the phase difference detection pixels (2a, 2b) are normal non-difference detection pixels.

2. The image capturing element (21) according to claim 1, wherein n=2.

3. An image capturing apparatus (10), ***characterized by*** comprising:
the image capturing element (21) according to claim 1 or 2; and
an image capturing element driving unit, which reads the captured image signal of the phase difference detection pixel when capturing the stereoscopic image.

4. The image capturing apparatus according to claim 3, wherein when capturing the planar image, the captured image signal of the pixel other than the phase difference detection pixel is read.

5. The image capturing apparatus (10) according to claim 4, further comprising:
an image processing unit (26, 27) which generates the planar image by using the captured image signal of any one of the plurality of adjacent pixels having the same color filter among the pixels other than the phase difference detection pixel or using the addition mean value of the captured image signals of the plurality pixels.

6. The image capturing apparatus (10) according to claim 4, wherein when the photographing scene is dark, the image processing unit (26, 27) generates the planar image by adding the captured image signals of the plurality of adjacent pixels having the same color filter among the pixels other than the phase difference detection pixel.

7. The image capturing apparatus (10) according to any one of claims 4 to 6, wherein the planar image and the stereoscopic image are captured simultaneously.

8. The image capturing apparatus (10) according to any one of claims 4 to 6, wherein the planar image is produced to be an image having an aspect ratio of 16:9 in such a manner that only pixel interleaving of the vertical direction is performed without performing pixel interleaving for the pixels of the horizontal direction of the image capturing element.

9. The image capturing apparatus (10) according to any one of claims 3 to 8, wherein when capturing the planar still image of high quality, the captured image signals are read from all the pixels of the image capturing element and the captured image signal of the phase difference detection pixel is corrected to generate the planar still image with high definition.

## Patentansprüche

1. Ein Bilderfassungselement (21), wobei
eine Vielzahl von Pixeln in einer quadratischen Gitterform angeordnet sind, Farbfilter in einer Bayer-Anordnung angeordnet sind, und ein Paar eines ersten Phasenunterschiedsdetektionspixels (2b), welches eines von aufgenommenen Bildsignalen für ein rechtes Auge und ein linkes Auge erfasst, und eines zweiten Phasendifferenzdetektionspixels (2b), welches das andere der aufgenommenen Bildsignale für das rechte Auge und das linke Auge erfasst, an diskreten und periodischen Positionen in der quadratischen Gitterform vorgesehen sind,
**dadurch gekennzeichnet, dass**
das erste Phasendifferenzdetektionspixel (2a) aus den entsprechenden Pixeln der quadratischen Gitterform bei einer jeden (2n + 1) ten Pixelposition (n = 1, 2,...) sowohl in einer Horizontalrichtung als auch in einer Vertikalrichtung vorgesehen ist,
das zweite Phasendifferenzdetektionspixel (2b) des Paares auf einem Pixel vorgesehen ist, welches denselben Farbfilter wie dessen zugehöriges erstes Phasendifferenzdetektionspixel aufweist und nur mit Bezug zu dessen zugehörigem ersten Phasendifferenzdetektionspixel um zwei Pixel in einer vertikalen Richtung beabstandet ist; wobei
Pixel in der quadratischen Gitterform außer den Phasendifferenzdetektionspixeln (2a, 2b) normale Nicht-Differenzdetektionspixel sind.

2. Bildaufnahmeelement (21) gemäß Anspruch 1, wobei n = 2.

3. Eine Bildaufnahmevorrichtung (10), **dadurch gekennzeichnet, dass** diese umfasst:
das Bildaufnahmeelement (21) gemäß Anspruch 1 oder 2; und
eine Bildaufnahmeelement-Betriebseinheit, welche das Aufnahmebildsignal des Phasendifferenzdetektionspixels ausliest, wenn das stereoskopische Bild aufgenommen wird.

4. Bildaufnahmevorrichtungen gemäß Anspruch 3, wobei, wenn das Planarbild aufgenommen wird, dass Aufnahmebildsignal des Pixels außer dem Phasendifferenzdetektionspixel ausgelesen wird.

5. Bildaufnahmevorrichtung (10) gemäß Anspruch 4, weiter umfassend:
eine Bildverarbeitungseinheit (26, 27), welche das Planarbild durch Verwenden des Aufnahmebildsignals eines der Vielzahl von benachbarten Pixeln mit demselben Farbfilter aus den Pixeln mit Ausnahme der Phasendifferenzdetektionspixel oder durch Verwenden des Additionssmittelwerts der Aufnahmebildsignale der Vielzahl von Pixeln erzeugt.

6. Bildaufnahmevorrichtungen (10) gemäß Anspruch 4, wobei, wenn die Fotografierszene dunkel ist, die Bildverarbeitungseinheit (26, 27) das Planarbild durch Hinzufügen der Aufnahmebildsignale der Vielzahl von benachbarten Pixeln mit demselben Farbfilter aus den Pixeln außer den Phasendifferenzdetektionspixeln erzeugt.

7. Bildaufnahmevorrichtungen (10) gemäß einem der Ansprüche 4 bis 6, wobei das Planarbild und das stereoskopische Bild gleichzeitig aufgenommen werden.

8. Bildaufnahmevorrichtung (10) gemäß einem der Ansprüche 4 bis 6, wobei das Planarbild produziert wird, um ein Bild zu sein, welches ein Seitenverhältnis von 16:9 derart aufweist, dass nur eine Pixelverschränkung der vertikalen Richtung ausgeführt wird, ohne ein Ausführen einer Pixelverschränkung für die Pixel der horizontalen Richtung des Bildaufnahmeelements.

9. Bildaufnahmevorrichtungen (10) gemäß einem der Ansprüche 3 bis 8, wobei, wenn das Planarstillbild einer hohen Qualität aufgenommen wird, die Aufnahmebildsignale von allen Pixeln des Bildaufnahmeelements ausgelesen werden und das Aufnahmebildsignal des Phasendifferenzpixels zum Erzeugen des Planarstillbilds mit einer hohen Auflösung korrigiert wird.

## Revendications

1. Élément de capture d'imageS (21), dans lequel :
une pluralité de pixels sont disposés en forme de réseau carré, des filtres de couleur sont agencés selon un agencement Bayer, une paire d'un premier pixel de détection de différence de phase (2b) qui acquiert l'un des signaux d'image capturé pour l'oeil droit et l'oeil gauche et d'un second pixel de détection de différence de phase (2b) qui acquiert l'autre des signaux d'image capturé pour l'oeil droit et l'oeil gauche est disposée dans des positions discrètes et périodiques de la forme de réseau carré,
**caractérisé en ce que** :
le premier pixel de détection de différence de phase (2a) est disposé parmi les pixels respectifs de la forme de réseau carré à chaque (2n+1)ème position de pixel (n = 1, 2, ...) à la fois dans la direction horizontale et la direction verticale,
le second pixel de détection de différence de phase (2b) de la paire est disposé sur un pixel ayant le même filtre de couleur que son premier pixel de détection de différence de phase correspondant et est seulement espacé de son premier pixel de détection de différence de phase correspondant de deux pixels dans la direction verticale ; dans lequel :
les pixels de la forme de réseau carré autres que les pixels de détection de différence de phase (2a, 2b) sont des pixels normaux de non détection de différence.

2. Élément de capture d'images (21) selon la revendication 1, dans lequel n = 2.

3. Appareil de capture d'images (10), **caractérisé en ce qu'**il comprend :
l'élément de capture d'images (21) selon la revendication 1 ou 2 ; et
une unité de commande d'élément de capture d'images qui lit le signal d'image capturée du pixel de détection de différence de phase lors de la capture de l'image stéréoscopique.

4. Appareil de capture d'images selon la revendication 3, dans lequel, lors de la capture de l'image planaire, le signal d'image capturée du pixel autre que le pixel de détection de différence de phase est lu.

5. Appareil de capture d'images (10) selon la revendication 4, comprenant en outre :
une unité de traitement d'images (26, 27) qui génère l'image planaire en utilisant le signal d'image capturée de l'un quelconque de la pluralité de pixels adjacents ayant le même filtre de couleur parmi les pixels autres que le pixel de détection de différence de phase ou en utilisant la valeur moyenne d'addition des signaux d'image capturée de la pluralité de pixels.

6. Appareil de capture d'images (10) selon la revendication 4, dans lequel, quand la scène de photographie est sombre, l'unité de traitement d'images (26, 27) génère l'image planaire en additionnant les signaux d'image capturée de la pluralité de pixels adjacents ayant le même filtre de couleur parmi les pixels autres que le pixel de détection de différence de phase.

7. Appareil de capture d'images (10) selon l'une quelconque des revendications 4 à 6, dans lequel l'image planaire et l'image stéréoscopique sont capturées simultanément.

8. Appareil de capture d'images (10) selon l'une quelconque des revendications 4 à 6, dans lequel l'image planaire est produite comme une image ayant un rapport d'aspect de 16:9 de manière que seul un entrelacement de pixels dans la direction verticale soit effectué sans effectuer un entrelacement de pixels pour les pixels de la direction horizontale de l'élément de capture d'images.

9. Appareil de capture d'images (10) selon l'une quelconque des revendications 3 à 8, dans lequel, lors de la capture de l'image planaire fixe de haute qualité, les signaux d'image capturée sont lus sur tous les pixels de l'élément de capture d'images et le signal d'image capturée du pixel de détection de différence de phase est corrigé pour générer l'image planaire fixe avec une haute définition.
